(19)

Europäisches
Patentamt
European
Patent Office
Office européen
des brevets

(11) **EP 2 149 856 A2**

(12) **EUROPEAN PATENT APPLICATION**

(43) Date of publication:
**03.02.2010 Bulletin 2010/05**

(51) Int Cl.:
***G06K 9/48*** *(2006.01)*          ***G06T 7/00*** *(2006.01)*

(21) Application number: **09251527.9**

(22) Date of filing: **10.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **29.07.2008 JP 2008194379**

(71) Applicants:
• **Hitachi CO., LTD.**
  **6-6 Marunouchi 1-chome**
  **Chiyoda-ku**
  **Tokyo 100-8280 (JP)**
• **Japan Tobacco, Inc.**
  **Tokyo 105-8422 (JP)**

(72) Inventors:
• **Yoshinaga, Tomoaki**
  **Tokyo 100-8220 (JP)**

• **Hidaka, Hideyukii**
  **c/o Hitachi, Ltd**
  **Tokyo 100-8220 (JP)**
• **Nagaya, Shigeki**
  **c/o Hitachi, Ltd**
  **Tokyo 100-8220 (JP)**
• **Sayama, Chiharu**
  **c/o Hitachi, Ltd**
  **Tokyo 100-8220 (JP)**
• **Shimokawa, Hiroyuki**
  **c/o Hitachi, Ltd**
  **Tokyo 100-8220 (JP)**
• **Watanabe, Hiroshi**
  **c/o Japan Tobacco Inc.**
  **Tokyo 105-8422 (JP)**

(74) Representative: **Moore, Graeme Patrick**
  **Mewburn Ellis LLP**
  **33 Gutter Lane**
  **London**
  **EC2V 8AS (GB)**

(54) **Image information processing method and apparatus**

(57)    An eye-gaze direction calculation unit calculates the eye-gaze direction in an input facial image of a person by carrying out prescribed operation processing based on iris shape data output from an iris detection unit and face-direction measurement data output from a face-direction measurement unit. The eye-gaze direction of the facial image of the person can be measured on the basis of accurate iris shape information obtained by an iris shape detection unit. The iris and sclera regions can be estimated on the basis of the detected eyelid contour information, thereby making it possible to accurately estimate the shape of the iris.

**FIG.1**

EP 2 149 856 A2

**Description**

This application relates to and claims priority from Japanese Patent Application No. 2008-194379, filed on July 29, 2008 the entire disclosure of which is incorporated herein by reference.

The present invention generally relates to an image information processing method and apparatus, which detect a facial image region in an input image and execute a prescribed image processing operation.

A procedure designed to make it possible to automatically detect whether or not a person in a video has a specific intention (is suspicious) has been developed in the past. This procedure performs the above-mentioned detection by extracting a plurality of information indicating behavioral intent from information related to the eye-gaze direction of the above-mentioned person, and a determination is made as to whether or not the above-mentioned person is suspicious by extracting gaze feature values (total time gazing in a specific direction; number of eye-gaze transitions; average gaze time; number of glimpses; eye-gaze variance value; average amount of eye-gaze movement; distance of general eye-gaze pattern) from the information related to the extracted eye-gaze direction (For example refer to Japanese Patent Application Laid-open No. 2007-6427).

A procedure designed to make it possible to accurately detect eye-gaze direction from an imaged facial image has also been developed in the past. This procedure detects the shape of the iris in an image in order to detect the center location of the pupil, and an example of this includes using an elliptical Hough transform to find the elliptical contour of the iris. Generally speaking, this procedure is applied because measuring the center location of the pupil requires detecting the contour of the iris and estimating the center of the pupil from the center location of this iris (For example, refer to Japanese Patent Publication No. 3797253).

The technique disclosed in Japanese Patent Application Laid-open No. 2007-6427 measures the eye-gaze direction of the person by measuring the angle formed between the center location of the eyeball and the center location of the pupil, but a specific technical procedure for detecting the above-mentioned center location of the pupil is not disclosed.

The technique disclosed in Japanese Patent Publication No. 3797253 requires that the contour of the iris be detected, but since the actual iris contour is partially hidden by the eyelid, the overall shape of the iris (the shape of the contour) does not appear in the image. For this reason, it is impossible to detect the entire shape of the contour of the iris from the above-mentioned image.

For example, in a case where an image processing such as the above-mentioned elliptical Hough transform image processing is carried out to detect the contour of the iris in an image of a person, the entire contour of the iris does not appear in the image, giving rise to problems, such as detecting only the part of the iris contour that appears in the image, and mistakenly detecting the peripheral part of the white part of the eye. The resultant problem is reduced accuracy in detecting the center location of the pupil, which is dependent on the detection of the contour of the iris, and the occurrence of major errors in measuring the eye-gaze direction of the person in the above-mentioned image.

Therefore, a preferred aim of the present invention is to make it possible to accurately measure the center location of the iris of a person in an image of this person that has been taken, and to realize a highly accurate eye-gaze direction measurement.

An image information processing apparatus according to a first aspect of the present invention preferably comprises a facial image region detection unit that detects a facial image region in an input image; an eyelid region contour detection unit that detects a contour of an eyelid region in the facial image region detected by the above-mentioned facial image region detection unit; and an iris region detection unit that detects a shape of the iris region in the above-mentioned facial image region on the basis of the above-mentioned eyelid region contour detected by the above-mentioned eyelid region contour detection unit, and a location of a pupil related to the above-mentioned iris region is estimated on the basis of the shape of the iris region detected by the above-mentioned iris region detection unit.

In an embodiment related to the first aspect of the present invention, the above-mentioned eyelid region contour detection unit creates an eyelid contour model on the basis of the size of the above-mentioned facial image region detected by the above-mentioned facial image region detection unit, and detects the contour of the eyelid region by detecting contour points of the eyelid region in the above-mentioned facial image region using this created eyelid contour model and by determining the location of the eyelid region.

In an embodiment that is different from the one mentioned above, the above-mentioned eyelid region contour detection unit determines a location, which is evaluated as the most likely eyelid region in the above-mentioned facial image region, to be the location of the above-mentioned eyelid region by superposing the above-mentioned eyelid contour model onto the above-mentioned facial image region.

In an embodiment that is different from those mentioned above, the above-mentioned evaluation is performed by extracting a feature value for each of the contour point locations in the above-mentioned eyelid contour model and calculating the likelihoods of these locations as contour points, and determining the sum of the calculated likelihoods.

In an embodiment that is different from those mentioned above, the above-mentioned eyelid region location determination by the above-mentioned eyelid region contour detection unit includes processing for searching, within respective prescribed ranges, for the optimum location of each contour point for demarcating the contour of the above-mentioned eyelid region, and updating the locations of the above-mentioned respective contour points determined in the previous search to locations to be determined as more appropriate.

Another embodiment that is different from those mentioned above further comprises a face direction measurement unit that measures a value indicating the direction in which the face of a person imaged in the above-mentioned facial image is oriented from the facial image region detected by the above-mentioned facial image region detection unit.

In another embodiment that is different from those mentioned above, the above-mentioned eyelid region contour detection unit creates an eyelid contour model on the basis of the size of the above-mentioned facial image region detected by the above-mentioned facial image region detection unit and the value indicating the direction in which the above-mentioned face is oriented as measured by the above-mentioned face direction measurement unit, and detects the contour of the eyelid region by detecting contour points of the eyelid region in the above-mentioned facial image region using this created eyelid contour model and by determining the location of the eyelid region.

In another embodiment that is different from those mentioned above, the above-mentioned iris region detection unit estimates the shape of an eyeball region in the above-mentioned facial image region on the basis of the value indicating the direction in which the above-mentioned face is oriented as measured by the above-mentioned face direction measurement unit and a prescribed eyelid contour model, and searches for the iris region location on the basis of this estimated eyeball region shape and determines the center location of the iris region and the shape of the iris region.

In yet another embodiment that is different from those mentioned above, at least respective data of the center of the eyeball region, the radius of the eyeball region, and the radius of the iris region is used in the process for estimating the shape of the above-mentioned eyeball region.

An image information processing method according to a second aspect of the present invention preferably comprises a first step of detecting a facial image region in an input image; a second step of detecting a contour of an eyelid region in the facial image region detected in the above-mentioned first step; a third step of detecting a shape of an iris region in the above-mentioned facial image region on the basis of the above-mentioned eyelid region contour detected in the above-mentioned second step; and a fourth step of estimating the location of a pupil related to the above-mentioned iris region on the basis of the shape of the iris region detected in the above-mentioned third step.

## BRIEF DESCRIPTION OF THE DRAWINGS

Fig. 1 is a functional block diagram showing the overall configuration of an image information processing system related to a first embodiment of the present invention;

Fig. 2 is a functional block diagram showing the internal configuration of the CPU (eye-gaze direction operator) mentioned in Fig. 1;

Fig. 3 is a schematic diagram showing an example of an eyelid contour model that is used by the eyelid contour detection unit mentioned in Fig. 2 when detecting the contour of the eyelid region;

Fig. 4 is an illustration showing the eyelid contour model mentioned in Fig. 3 superposed onto the image region of an actual eye imaged using the imaging device mentioned in Fig. 1;

Fig. 5 is a flowchart showing an example of the processing operation for detecting the contour of the eyelid region in accordance with the eyelid contour detection unit mentioned in Fig. 2;

Fig. 6A is the first illustration of the processing operation for detecting the iris region in accordance with the iris detection unit;

Fig. 6B is the second illustration of the processing operation for detecting the iris region in accordance with the iris detection unit;

Fig. 6C is the third illustration of the processing operation for detecting the iris region in accordance with the iris detection unit;

Fig. 6D is the forth illustration of the processing operation for detecting the iris region in accordance with the iris detection unit;

Fig. 7 is a schematic diagram showing an example of a method for changing the range of the search for the respective contour points corresponding to the face direction in the facial image when searching for the locations of the respective contour points of the eyelid contour model related to the second embodiment of the present invention;

Fig. 8 is a flowchart showing an example of the processing operation for detecting an eyelid contour in accordance with the eyelid contour detection unit related to the second embodiment of the present invention;

Fig. 9 is a schematic diagram showing an example of the eyeball model that the CPU (eye-gaze direction operator) related to a third embodiment of the present invention uses when estimating the shape of the eyeball region within an input facial image;

Fig. 10A is the first illustration of the processing operation for detecting the iris region related to the third embodiment of the present invention;

Fig. 10B is the second illustration of the processing operation for detecting the iris region related to the third embodiment of the present invention; and

Fig. 11 is a flowchart showing an example of the processing operation for detecting the iris region in accordance with the iris detection unit related to the third embodiment of the present invention.

The embodiments of the present invention will be explained in more detail below in accordance with the drawings.

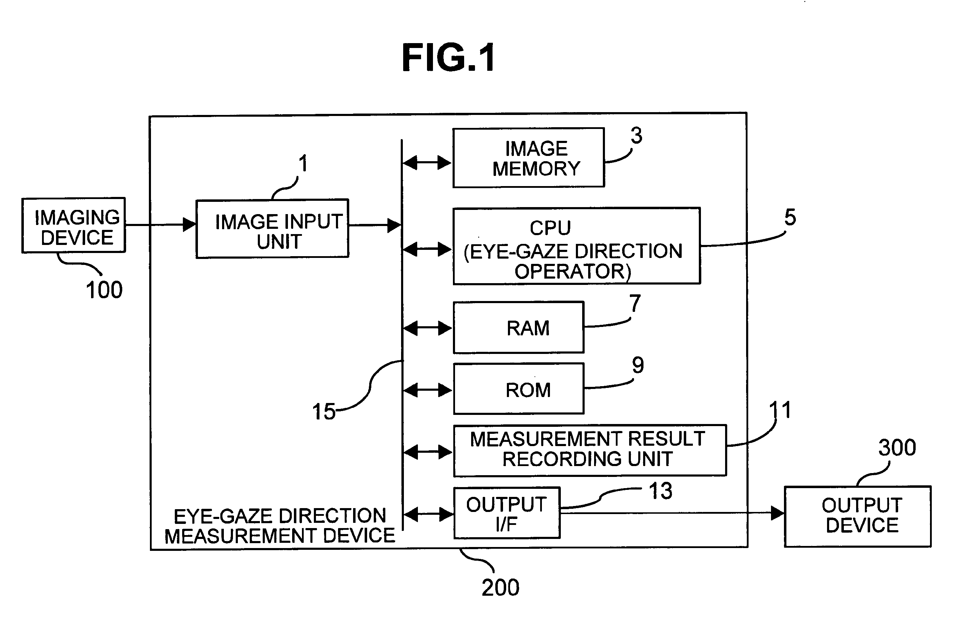

Fig. 1 is a functional block diagram showing the overall configuration of the image information processing system related to a first embodiment of the present invention.

The above-mentioned image information processing system, as shown in Fig. 1, comprises an imaging device 100; an eye-gaze direction measurement device 200; and an output device 300. The eye-gaze direction measurement device 200 comprises an image input unit 1; an image memory 3; an eye-gaze direction operator (CPU) 5; a RAM 7; a ROM 9; a measurement result recording unit 11; and an output interface (output I/F) 13, and is configured such that the above-mentioned parts (1 through 13) are interconnected via a bus line 15.

In Fig. 1, either one or a plurality of devices capable of imaging a movable object, such as a digital video camera, is used in the imaging device 100. The imaging device 100 outputs an imaged movable object (for example, the facial image of a person) to the image input unit 1.

The image input unit 1, under the control of the CPU 5, inputs the image information output from the above-mentioned imaging device 100, and, in addition, outputs this input image information to the image memory 3 via the bus line 15.

The image memory 3, under the control of the CPU 5, stores in a prescribed storage area the above-mentioned image information output via the bus line 15 from the image input unit 1. The image memory 3 also outputs the stored image information to the CPU 5 via the bus line 15 in accordance with an information read-out request from the CPU 5.

In the RAM 7, for example, there is provided a storage area needed for the CPU 5 to deploy the above-mentioned image information when the CPU 5 executes a prescribed arithmetic processing operation for the above-mentioned image information.

The ROM 9 is equipped with a control program required for the CPU 5 to control and manage the operations of the respective parts comprising the eye-gaze direction measurement device 200, and stores nonvolatile fixed data. The ROM 9 also outputs the above-mentioned stored nonvolatile fixed data to the CPU 5 via the bus line 15 in accordance with a data read-out request from the CPU 5.

The measurement result recording unit 11 records various types of data obtained in accordance with the CPU 5 carrying out a prescribed arithmetic processing operation with respect to the above-mentioned image information, for example, measurement data related to a person's eye-gaze direction included in the above-mentioned image information. The measurement result recording unit 11 outputs the above-mentioned recorded measurement data to the output device 300 via the bus line 15 and output I/F 13 in accordance with a data read-out request from the CPU 5. The above-mentioned arithmetic processing operation by the CPU 5 and the measurement data recorded in the measurement result recording unit 11 will be described in detail hereinbelow.

The output I/F 13, under the control of the CPU 5, connects to the output device 300, and outputs to the output device 300 the above-mentioned measurement data output via the bus line 15 from the measurement result recording unit 11.

For example, a display (monitor), printer, and PC (refers to a personal computer, both here and below) are utilized in the output device 300. In a case where the output device 300 is a monitor, image information captured by the imaging device 100 is displayed and output as visible image information. In a case where the output device 300 is a printer, a hard copy related to the above-mentioned measurement data output from the measurement results recording unit 11 via the output I/F 13 is output. And in a case where the output device 300 is a PC, the above-mentioned measurement data is output in a mode that is recognizable to the user.

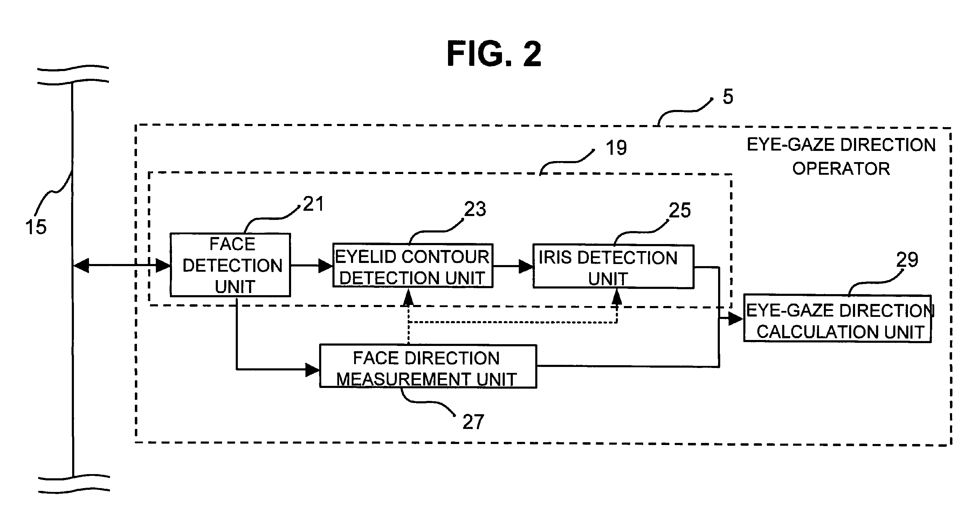

Fig. 2 is a functional block diagram showing the internal configuration of the CPU (eye-gaze direction operator) 5 mentioned in Fig. 1.

The CPU 5, as shown in Fig. 2, comprises the functions respectively shown in each of the functional blocks, i.e. an iris shape detection unit 19, a face direction measurement unit 27, and an eye-gaze direction calculation unit 29. That is, the iris shape detection unit 19 is configured to detect the facial image of a person and to accurately detect the shape of this person's iris region based on image information input via the bus line 15, and the iris shape detection unit 19 comprises the functions respectively shown in each functional block, i.e. a face detection unit 21, an eyelid contour detection unit 23 and an iris detection unit 25.

The face detection unit 21 detects the facial image of a person included in the input image information by carrying out prescribed image processing for the input image information. In a case where there is a plurality of facial images in the above-mentioned input image information, the face detection unit 21 executes a detection operation for the number of facial images mentioned above. The above-mentioned person facial image information detected by the face detection unit 21 is respectively output to the eyelid contour detection unit 23 and the face direction measurement unit 27.

The eyelid contour detection unit 23 detects the contours of the eyelid regions of both the right and left eyes in the region of the facial image output by the face detection unit 21 in accordance with carrying out prescribed image processing. This detection result is output to the iris detection unit 25 from the eyelid contour detection unit 23. Furthermore, in a case where there is a plurality of facial images detected by the face detection unit 21, the above-mentioned processing operation is executed in the eyelid contour detection unit 23 for each of the above-mentioned facial images.

The faced direction measurement unit 27 inputs the above-mentioned facial image information output from the face detection unit 21, and carries out measurement processing on the face direction (orientation of the face) of this facial image. The data obtained in accordance with this measurement is output to the eye-gaze direction calculation unit 29 from the face direction measurement unit 27.

The iris detection unit 25 detects the shape of the iris region based solely on the information related to the iris region and sclera region, which are the inner side parts of the eyelid region (the parts of the imaging regions covered by this eyelid region) by using the contour information of the eyelid region output from the eyelid contour detection unit 23 to execute a prescribed processing operation. Furthermore, in a case where there is a plurality of facial images detected by the face detection unit 21, the above-mentioned processing operation in the iris detection unit 25 is executed for each of the above-mentioned respective facial images. The iris region shape data obtained by the iris detection unit 25 is output to the eye-gaze direction calculation unit 29 from the iris detection unit 25.

The eye-gaze direction calculation unit 29 calculates the eye-gaze direction in the above-mentioned person's facial image by carrying out prescribed arithmetic processing on the basis of the above-mentioned iris region shape data output from the iris detection unit 25 and face direction measurement data output from the face direction measurement unit 27. According to the above-mentioned configuration, it is possible to measure the eye-gaze direction of the person's facial image having this iris region on the basis of highly accurate iris region shape information obtained in the iris shape detection unit 19. The iris region part and the sclera region part may also be estimated based on the detected eyelid region contour information, making it possible to accurately estimate the shape of the iris region.

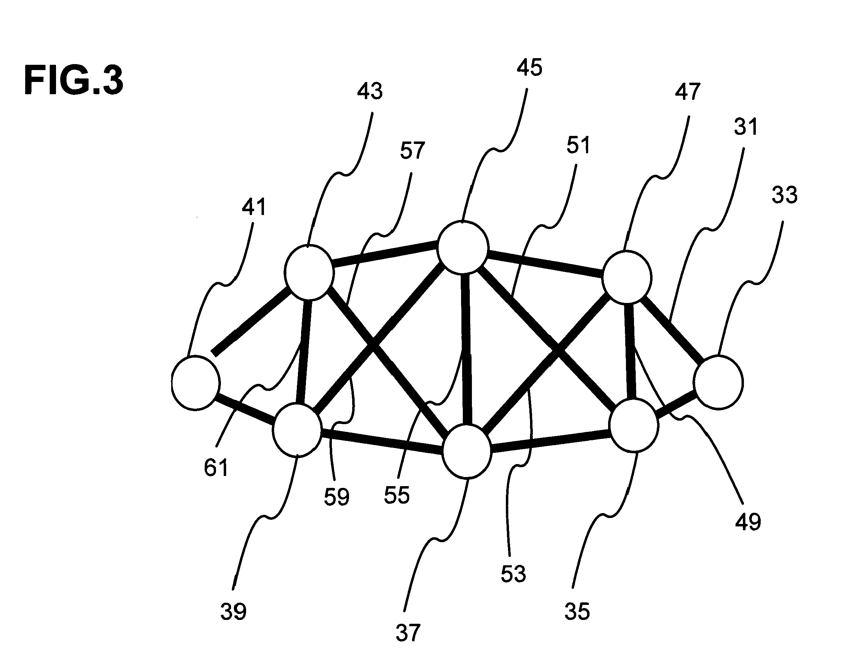

Fig. 3 is a schematic diagram showing an example of the eyelid contour model 31 that the eyelid contour detection unit 23 mentioned in Fig. 2 uses when detecting the contour of the eyelid region described hereinabove.

As shown in Fig. 3, the eyelid contour model 31 is configured by a plurality of points (33 through 47, hereinafter described as either "contour points" or "edge points") for demarcating the contour of the eyelid region in the input facial image (there are eight contour points in the example shown in Fig. 3). In addition to the respective contour points (33 through 47) mentioned above, the above-mentioned eyelid contour model 31 also has a plurality of lines (49 through 61) for connecting contour points having a strong positional interrelationship.

Line 49 shows a relationship between contour point 35 and contour point 47, line 51 shows a relationship between contour point 35 and contour point 45, and line 53 shows a relationship between contour point 37 and contour point 47. Further, line 55 shows a relationship between contour point 37 and contour point 45, line 57 shows a relationship between contour point 37 and contour point 43, line 59 shows a relationship between contour point 39 and contour point 45, and line 61 shows a relationship between contour point 39 and contour point 43.

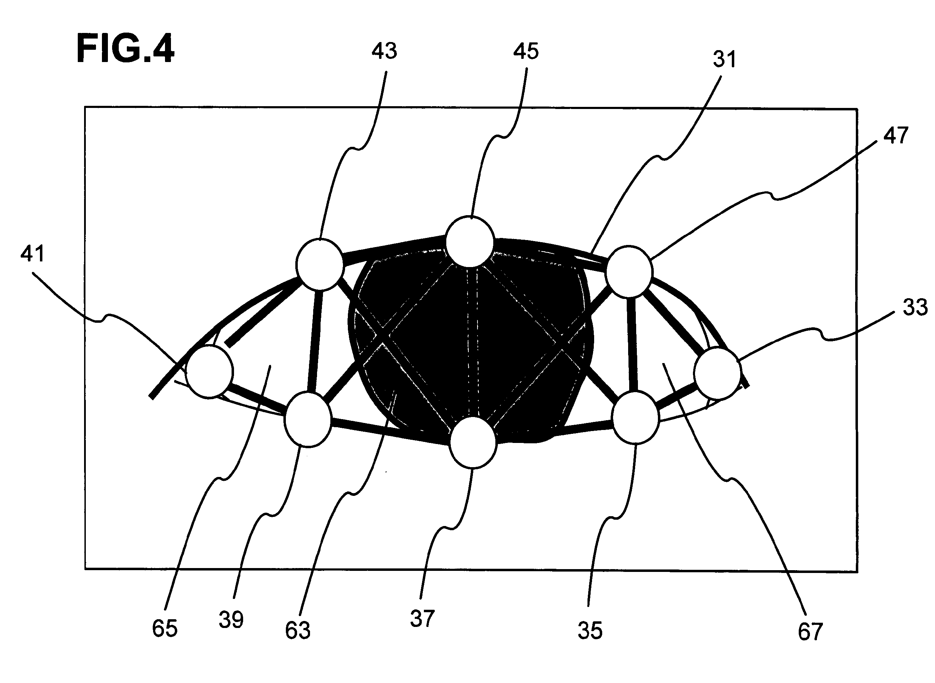

Fig. 4 is an illustration showing a state in which the eyelid contour model 31 mentioned in Fig. 3 is superposed onto the image region of an actual eye imaged by the imaging device 100 mentioned in Fig. 1.

In Fig. 4, the grey-colored region 63 denotes the iris region, and the inside perimeter-side white regions 65, 67, which are regions exclusive of this region 63, and which are demarcated by the above-mentioned eyelid contour model 31, show the sclera region. Furthermore, in Fig. 4, objects that are identical to the objects shown in Fig. 3 have been assigned the same reference numerals, and detailed explanations thereof will be omitted. Applying the eyelid contour model 31 shown in Fig. 3 to an actual eye image region as shown in Fig. 4 makes it possible to accurately detect the shape of the contour points of the eyelid region from the image region of the actual eye without losing much of the shape of the eyelid region.

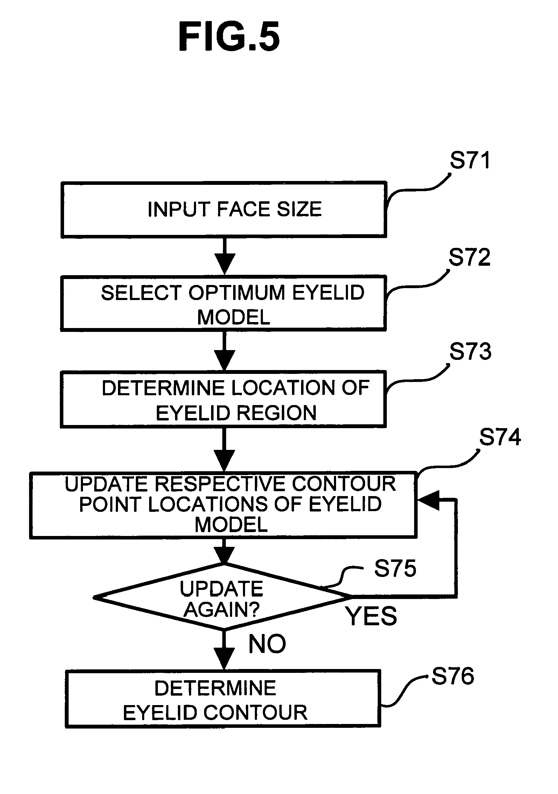

Fig. 5 is a flowchart showing an example of the processing operation for eyelid region contour detection in accordance with the eyelid contour detection unit 23 mentioned in Fig. 2.

In Fig. 5, first, the eyelid contour detection unit 23 inputs information related to the size of the facial image obtained in the face detection unit 21 (Step S71). Next, the eyelid contour detection unit 23 estimates the size of the contour of the eyelid region on the basis of the information related to the above-mentioned facial image size that is input in Step S71, and creates an optimum eyelid contour model 31 like that shown in Fig. 3 on the basis of this estimated result. Furthermore, an eyelid contour model for the right eye and an eyelid contour model for the left eye are respectively created as this eyelid contour model 31. Then, the contour points of the eyelid regions for the respective regions of the right and left eyes are detected by respectively superposing the eyelid contour model created for the left eye and the eyelid contour model created for the right eye onto the left eye region and the right eye region (Step S72).

Next, a processing operation for determining the location of the eyelid regions in the respective images of the left and right eyes is executed. In this processing operation, the eyelid contour detection unit 23 superposes the eyelid contour model 31 onto the peripheral region of the region of the eye in the above-mentioned input facial image as described hereinabove, and evaluates the so-called likelihood of an eyelid region, and determines the location with the highest evaluation, that is, the location determined to be the most likely eyelid region in the peripheral region of this eye region, as the eyelid region. This evaluation, for example, is carried out by extracting the various feature values for each contour point location in the above-described eyelid contour model 31 and calculating the likelihood of the location as a contour point, and, in addition, determining the sum of the calculated likelihoods. For example, an edge value, a Gabor filter value, template matching similarities and the like are used as the feature values for each of the above-mentioned contour point locations (Step S73).

Next, the eyelid contour detection unit 23 executes processing for searching for the optimum locations of the respective contour points in the above-mentioned eyelid contour model 31. The eyelid region contour shape will differ for each person, and will also differ for the same person in accordance with changes in facial expression, making it necessary to search for the precise location of each of the respective contour points. In this processing operation, the updating of the locations of the respective contour points is performed by searching only for the optimum location within a specified range for each contour point (Step S74).

When the processing operation of the above-described Step S74 ends, the eyelid contour detection unit 23 checks to determine whether or not to carry out the processing operation in Step S74 once again, that is, whether or not to update the locations of the above-mentioned respective contour points (Step S75). As a result of this check, if it is determined that updating should be carried out once again (Step S75: YES), the eyelid contour detection unit 23 returns to Step S74. Conversely, if it is determined as a result of this check that there is no need to carry out updating again (Step S75: NO), the eyelid contour detection unit 23 determines that the above-mentioned respective contour point locations updated in Step S74 are the final locations. That is, the locations of the above-mentioned respective contour points updated in Step S74 constitute the detection results of the locations of the respective contour points required to configure the contour of the eyelid region in the above-mentioned eye region (Step S76).

Furthermore, when the determination in Step S75 is not to update again (Step S75: NO), it is either a case in which the above-mentioned contour point locations were not updated even once in Step S74, or a case in which the number of processes in Step S74 exceeded a predetermined number of times.

In accordance with the above-described processing flow, detection of the contour of the eyelid region becomes possible even when the shape of the eyelid region contour has changed significantly as a result of the person, whose facial image has been input, being switched, or the same person having significantly changed his facial expression. That is, it is possible to accurately detect the contour of the eyelid region in the region of the eye by splitting up the processing operation into an operation for determining the location of the eyelid region within the eye region shown in Step S73, and an operation for updating the locations of the respective contour points in the eyelid region shown in Step S74. It is also possible to determine the locations of the above-mentioned respective contour points without losing much of the shape capable of being obtained as the eyelid contour by repeating the processing for gradually updating the locations of all the contour points demarcating the eyelid region in Steps S74 and S75.

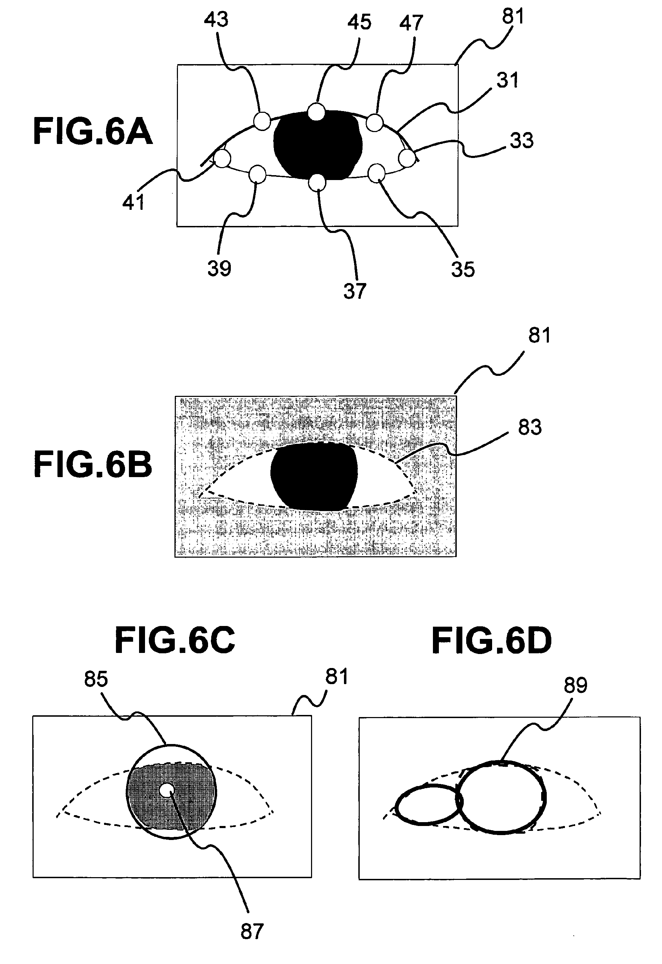

Fig. 6A to 6D are the first to forth illustrations of the processing operation for detecting the iris region in accordance with the iris detection unit 25 mentioned in Fig. 2.

Fig. 6A shows a state in which the respective contour points (33 through 47) of the eyelid contour model 31 obtained by the eyelid contour detection unit 23 have been set with respect to (the eye region of) the facial image input to the eye-gaze direction operator 5. The eye region 81 in the above-mentioned facial image is an image in which only the peripheral region of the eye region is clipped based on information related to the locations of the above-described respective contour points (33 through 47). Fig. 6B shows the same eye region 81 as that in Fig. 6A, and is obtained by clipping only the peripheral region of the eye region based on information related to the locations of the respective contour points (33 through 47) of the above-mentioned eyelid contour model 31.

In Fig. 6B, the curved line 83 indicated by the broken line is the contour line for demarcating the contour of the eyeball region itself determined from (information related to the locations of) the respective contour points (33 through 47) of the above-mentioned eyelid contour model 31, and also constitutes the border line between the eyeball region and the peripheral region of this eyeball region (that is, the eyelid region). In Fig. 6B, the above-mentioned border line and the above-mentioned contour line are both rendered by the curved line 83, but the above-mentioned border line may also be set in the inner side of the above-mentioned contour line, that is, on the inner side of the above-mentioned curved line 83. Setting the above-mentioned border line on the inner side of the above-mentioned curved line 83 like this makes it possible to remove illumination-related shadows affecting the sclera region part, and to consequently estimate the shape of the iris region with a high degree of accuracy.

Edge image processing is carried out solely for the above-mentioned eye region 81 in which only the iris region and sclera region have been detected. Consequently, it is possible to obtain an edge image in which only the edge of the border part between the iris region and the sclera region is revealed without revealing an edge for the noise outside of the above-mentioned eye region 81 of the contour line part of the eyelid region. Carrying out an elliptical Hough transform for the above-mentioned edge image makes it possible to accurately estimate the shape of the iris region from the border part between the iris region and the sclera region.

For example, an iris region like that shown in Fig. 6C is detected by the iris detection unit 25 based on the eye region 81 respectively shown in Figs. 6A and 6B. That is, a contour (line) 85 showing a circular shaped iris region is detected by the iris detection unit 25 from the above-mentioned eye region 81, and the center location of this iris region (that is, the pupil part) 87 may be obtained at this time.

In a case where the contour line of the eyelid contour model 31 is not removed from the above-mentioned eye region 81, an iris region like that shown in Fig. 6D for example is output from the iris detection unit 25 as the result of a false detection operation on the part of the iris detection unit 25. That is, leaving the contour line of the eyelid contour model 31 inside the above-mentioned eye region 81 may cause the iris detection unit 25 to respond to the border part between the eyelid region and the sclera region, and falsely detect the sclera region as shown in Fig. 6D. The iris detection unit 25 may also falsely detect an image region of a substantially circular shape that ignores the iris region hidden on the inside of the eyelid (region) as shown by reference numeral 89 in Fig. 6D, but in the eye-gaze direction operator 5 related to this embodiment, completely removing image regions other than the iris region and the sclera region from the respective contour points (33 through 47) configuring the contour line of the eyelid contour model 31 makes it possible to prevent an iris region false detection operation by the iris detection unit 25 as described above.

Furthermore, in the face direction measurement unit 27 (shown in Fig. 2), for example, applying a measurement method like that disclosed in the above-mentioned Japanese Patent Application Laid-open No. 2007-6427 makes it possible to accurately measure the face direction in the facial image that has been input without performing a correction process beforehand. In the eye-gaze direction calculation unit 29 (shown in Fig. 2) as well, the divergence of the center location of the pupil with respect to the center location of the eyeball region is determined and the eye-gaze direction of the facial image is calculated from this determined divergence of the center location of the pupil by applying a measurement method like that disclosed in the above-mentioned Japanese Patent Application Laid-open No. 2007-6427 and estimating the center location of the eyeball region and the radius of the eyeball region in the above-mentioned eye region 81.

The method for calculating the eye-gaze direction of the facial image will be explained in detail below.

If it is assumed here that the radius of the eyeball region, which is the target of the eye-gaze direction calculation, is r, that the center location of this eyeball region is O, and that the center location of the pupil in this eyeball region is I, the eye-gaze direction of the facial image is calculated in accordance with (Numerical Expression 1) below.

[Numerical Expression 1]

$$\phi_{eye} = \sin^{-1} \frac{Ix - Ox}{r}$$

$$\theta_{eye} = \sin^{-1} \frac{Iy - Oy}{r}$$

In (Numerical Expression 1), $\phi_{eye}$ denotes the horizontal direction component of the eye-gaze direction, and $\theta_{eye}$ denotes the vertical direction component of the eye-gaze direction, respectively. Further, Ix denotes the X coordinate of the pupil center location I, Iy denotes the Y coordinate of the pupil center location I, Ox denotes the x coordinate of the eyeball region center location O, and Oy denotes the y coordinate of the eyeball region center location O. The pupil center location I here may be estimated from the iris region center location C and the eyeball center location O.

Employing the above calculation method makes it possible to accurately detect the shape of the iris region even when a portion of the iris region is concealed inside the contour of the eyelid region or when a shadow caused by eyeglasses or illumination appears in the perimeter of the eye region by removing the effects thereof, thereby enabling the eye-gaze direction of the facial image to be accurately measured.

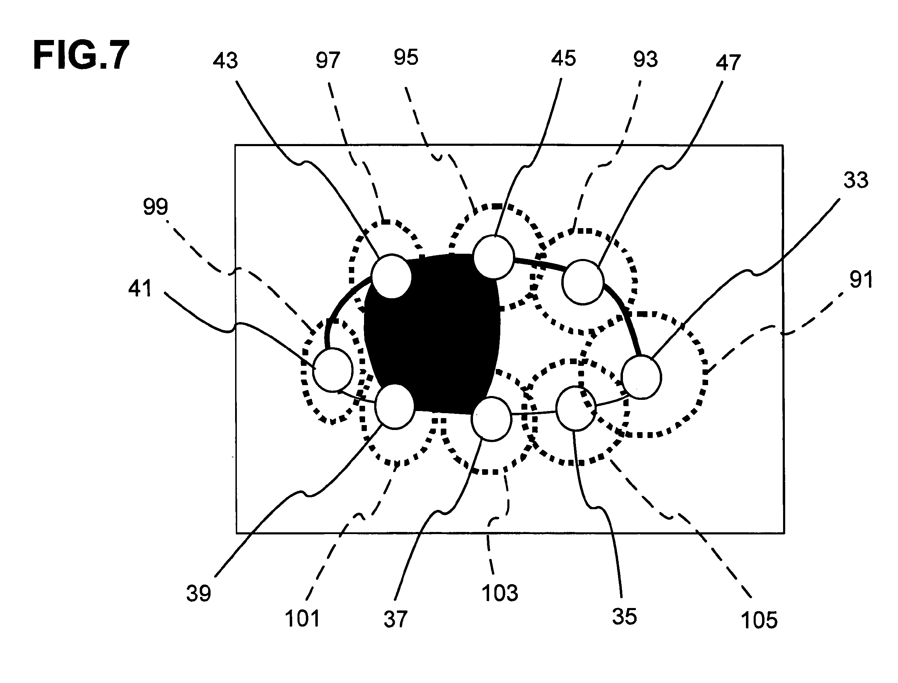

Fig. 7 is a schematic diagram showing an example of a method for changing the range of the search for the respective contour points (33 through 47) corresponding to the face direction in the facial image when searching for the locations of the respective contour points (33 through 47) of the eyelid contour model 31 related to the second embodiment of the present invention.

The facial image depicted in Fig. 7 shows the shape of the right eye region of this facial image in a case where the face is oriented toward the right (toward the left side facing the image). The circular regions (91 through 105) indicated by the broken lines respectively enclosing the contour points (33 through 47) in Fig. 7 show the range of the search for these respective contour points (33 through 47). In the example shown in Fig. 7, the search ranges for the above-mentioned respective contour points (33 through 47) are not necessarily uniform. A search range that differs in accordance with the orientation (direction) of the face is set for each person contour point (33 through 47). That is, a narrow search range is set for a contour point that is located in the direction in which the face is oriented, and a wide search range is set for a contour point that is located opposite the direction in which the face is oriented.

The reason for setting the search ranges for the respective contour points (33 through 47) as described above is because of the large angle that is formed between a contour point located in the direction in which the face is oriented and the center of the face, and the fact that the location of the contour point changes little in accordance with the rotation of the face, a narrow search range is set. In contrast to this, since the location of a contour point, which is located opposite the direction in which the face is oriented, will change greatly in accordance with a change in the direction in which the face is oriented, a wide search range must be set.

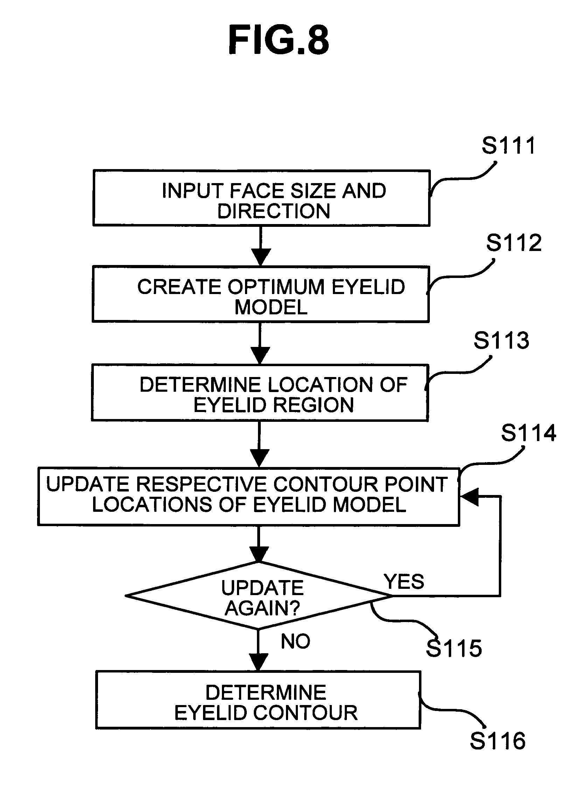

Fig. 8 is a flowchart showing an example of the processing operation for detecting an eyelid contour in accordance with the eyelid contour detection unit (indicated by reference numeral 23 in Fig. 2) related to the second embodiment of the present invention.

In this embodiment, the above-mentioned eyelid contour detection unit (23) acquires a value denoting the direction in which the face is oriented in the input facial image from the face direction measurement unit (27) (shown together with this eyelid contour detection unit 23 in Fig. 2). For this reason, in the flowchart shown in Fig. 8, when the above-mentioned eyelid contour detection unit (23) executes a series of processing operations to detect the eyelid contour, first, facial image size information output from the face detection unit 21 and a value indicating the direction in which the face is oriented in this facial image is input (Step S111).

Next, the above-mentioned eyelid contour detection unit (23) creates an eyelid contour model based on the information related to the size of the above-mentioned input facial image and the value indicating the direction in which the above-mentioned face is oriented of Step S111. That is, from the information related to the size of the above-mentioned input facial image and the value indicating the direction in which the above-mentioned face is oriented of Step S111, the eyelid contour detection unit (23) carries out a process that rotates a standard eyelid contour model 31 in conformance to the value indicating the direction in which the above-mentioned face is oriented, and creates an eyelid contour model that approximates the contour shape of the eyelid region in the input facial image (Step S112).

When an eyelid contour model like that described above is created in Step S112, the same processing operations as those shown in Fig. 5 are executed using this created eyelid contour model (Steps S113 through S116). That is, the processing operation described in Step S113 is the same as the processing operation described in Step S73 of Fig. 5, the processing operation described in Step S114 is the same as the processing operation described in Step S74 of Fig. 5, the processing operation described in Step S115 is the same as the processing operation described in Step S75 of Fig. 5, and the processing operation described in Step S116 is the same as the processing operation described in Step S76 of Fig. 5. Accordingly, detailed explanations of Steps S113 through S116 will be omitted.

The mode for changing the respective contour points (33 through 47) corresponding to the face direction of the facial image shown in Fig. 7 is related to the processing operation depicted in Step S114.

In accordance with the processing flow described hereinabove, highly accurate detection of the respective contour points for demarcating the contour of the eyelid region in the facial image becomes possible, even when the contour shape of the eyelid region has changed significantly as a result of the direction in which the face is oriented in the input facial image having changed, since it is possible to carry out detection processing by superposing an eyelid contour model that simulates the changed state of the facial image onto this changed-state facial image. Further, the processing operation depicted in Step S114 and the processing operation in Step S115 of Fig. 8 (that is, the number of repetitive operations in accordance with re-updating the location of the respective contour points configuring the eyelid contour model) may be greatly reduced, thereby making it possible to speed up the search for the locations of the respective contour points.

Determining the search range for the locations of the respective contour points in accordance with the above method, estimating the expected range of motion of the contour of the eyelid region in the input facial image, and limiting the search range to within this estimated range makes it possible to detect the contour points of the eyelid region with even higher accuracy. In addition, since the number of times that the search process is carried out is reduced, it is possible to reduce the time required for the above-mentioned search process.

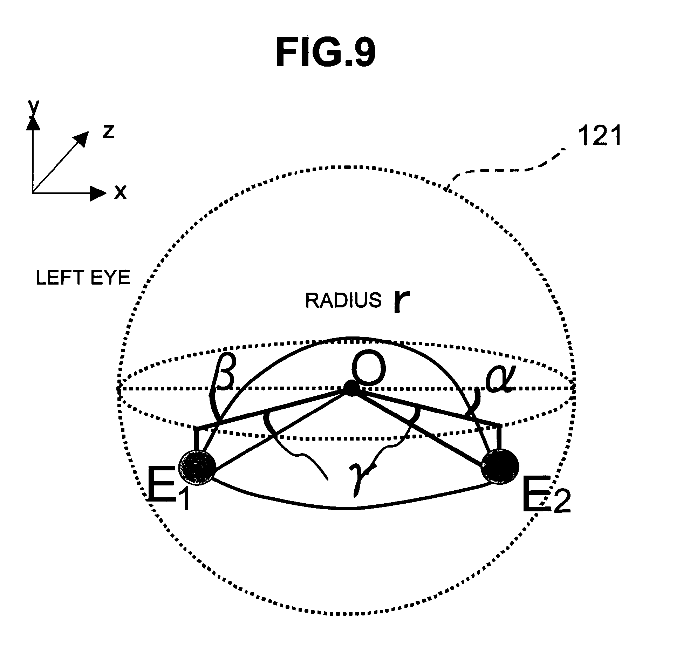

Fig. 9 is a schematic diagram showing an example of the eyeball model that the CPU (eye-gaze direction operator) (5) (mentioned in Fig. 1) related to a third embodiment of the present invention uses when estimating the shape of the eyeball region within the input facial image.

In this embodiment, the center location O of the eyeball region in the above-mentioned imaged facial image, and the radius r of this eyeball region are estimated by using an eyeball model 121 like that shown in Fig. 9. in the above-mentioned eyeball model 121, if it is assumed that the location of the outer corner of the eye is depicted by $E_1$ and the location of the inner corner of the eye is depicted by $E_2$ on the contour of the eyelid region in the facial image determined by the eyelid contour detection unit 23, the location of the outer corner of the eye $E_1$ may be defined as existing at a location of $\beta$ degrees at the center of the Y axis and $\gamma$ degrees at the center of the X axis with respect to the eyeball center location O (in this eyeball model 121). Similarly, the location of the inner corner of the eye $E_2$ may be defined as existing at a location of $\alpha$ degrees at the center of the Y axis and $\gamma$ degrees at the center of the X axis with respect to the eyeball center location O (in this eyeball model 121). If it is supposed that $E_{1x}$ stands for the X coordinate of the location of the outer corner of the eye $E_1$, that $E_{2x}$ stands for the X coordinate of the location of the inner corner of the eye $E_2$, and that $\phi_{face}$, $\phi_{face}$ stand for the direction in which the face is oriented in the input facial image, the radius r of the eyeball region in the above-mentioned imaged facial image is calculated in accordance with the following (Numerical Expression 2).

[Numerical Expression 2]

$$ r = \frac{(E_{2x} - E_{1x})}{\cos(\gamma + \theta_{face})(\sin(90 - \beta + \phi_{face}) - \sin(\alpha - 90 + \phi_{face}))} $$

Next, the coordinates $(O_X, O_Y)$ denoting this eyeball region center location O are calculated in accordance with the following (Numerical Expression 3) from the radius r of the eyeball region in the above-mentioned imaged facial image determined using (Numerical Expression 2).

[Numerical Expression 3]

$$ O_x = E_{1x} - r\sin(\beta - 90 + \phi_{face})\cos(\gamma + \theta_{face}) $$

$$ O_y = \{E_{1y} + E_{2y} - r\sin(\gamma + \theta_{face})(\sin(\beta - 90 + \phi_{face}) + \sin(\alpha - 90 + \phi_{face}))\} / 2 $$

In accordance with defining the above-mentioned eyeball model 121 using the mode described above, it becomes possible to estimate the eyeball region radius r in the above-mentioned imaged facial image and the center location O of this eyeball region from the direction in which the face is oriented in the input facial image and the contour shape of the eyelid region within the above-mentioned facial image.

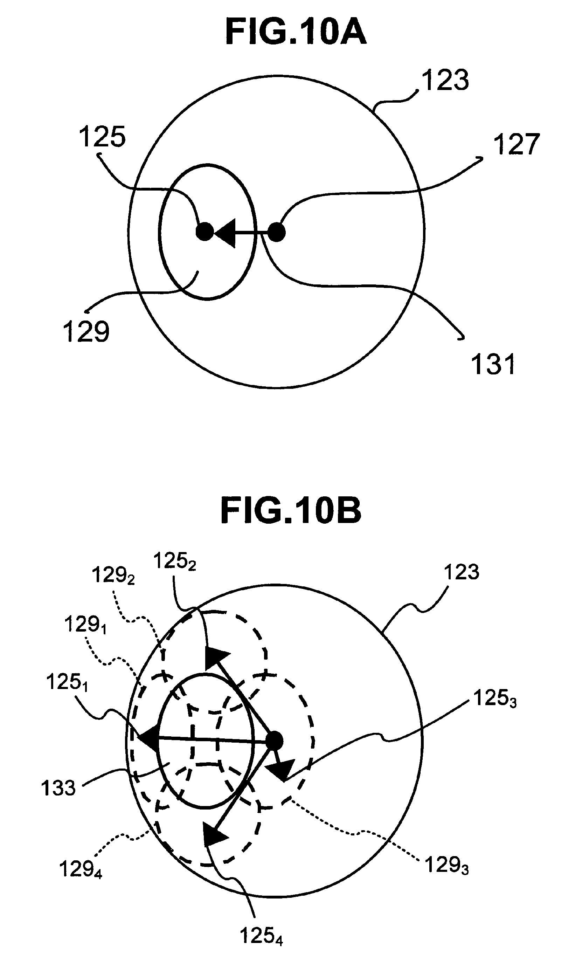

Fig. 10A and 10B are the first and second illustrations of processing operations for detecting the iris region related to the third embodiment of the present invention.

An eyeball estimation model 123 like that shown in Fig. 10A is defined on the basis of the center and radius of the eyeball region in the facial image input by the eye-gaze direction operator (5) (mentioned in Fig. 2) determined by a prescribed operation process, and the above-mentioned eyeball estimation model (123), for example, is shown as seen from an oblique lateral direction. The radius of the iris region 129 in the eyeball estimation model 123 shown in Fig. 10A is determined from the radius of this above-mentioned eyeball estimation model 123. In the eyeball estimation model 123 shown in Fig. 10A, the iris region center location 125 exists in the center location of this eyeball estimation model 123, that is, in a location separated from the above-mentioned eyeball center location 127 by the distance depicted by the arrow (vector) 131. Also, region 129 is the iris region obtained on the basis of the iris region center location 125 and the iris region radius (determined in accordance with the above-mentioned mode).

Fig. 10B shows the relationship between the respective center locations $125_1$ through $125_4$ of this iris region and the respective estimated iris regions $129_1$ through $129_4$ corresponding to the respective center locations $125_1$ through $125_4$ in a case where the iris region center location 125 shown in Fig. 10A has been moved in a rotational manner based on the above-mentioned eyeball center location 127 (that is, the center location of this eyeball estimation model 123). Changing the center location of the iris region here is equivalent to the person imaged in the above-mentioned facial image changing his eye-gaze direction.

In a case where the rotation of the eyeball places the center location of the iris region in the location denoted by the reference numeral $125_1$, the estimated iris region corresponding to this center location $125_1$ is region $129_1$, and similarly, in a case where the rotation of the eyeball places the center location of the iris region in the location denoted by the reference numeral $125_2$, the estimated iris region corresponding to this center location $125_2$ is region $129_2$. Also,

in a case where the rotation of the eyeball places center location of the iris region in the location denoted by the reference numeral $125_3$, the estimated iris region corresponding to this center location $125_3$ is region $129_3$, and similarly, in a case where the rotation of the eyeball places the center location of the iris region in the location denoted by the reference numeral $125_4$, the estimated iris region corresponding to this center location $125_4$ is region $129_4$. Region 133 is the same region as iris region 129 in Fig. 10A.

The optimum estimated iris region (any one of $129_1$ through $129_4$) is determined from among the above-described estimated iris regions ($129_1$ through $129_4$) by comparing and contrasting the respective estimated iris regions $129_1$ through $129_4$ mentioned above with the facial image input to the eye-gaze direction operator (5) (mentioned in Fig. 2). In the above-mentioned comparison and contrast process, an evaluation as to whether the location of any of the estimated iris regions (any of $129_1$ through $129_4$) is the correct iris region location is carried out, for example, by checking how much the edge points (the previously mentioned contour points) overlap, and whether the iris region and sclera region are correct when three-dimensional eyeball models like those shown in Fig. 10A and Fig. 10B are projected onto a two-dimensional image surface.

Then, as a result of the above evaluation, the most plausible location of the above-mentioned estimated iris regions ($129_1$ through $129_4$) in the eyeball estimation model 123 described above is determined to be the location of the iris region in the above-mentioned eyeball estimation model 123.

As mentioned hereinabove, changing the center location of the iris region is equivalent to the person imaged in the above-mentioned facial image changing his eye-gaze direction. For this reason, the eye-gaze direction of the person imaged in the above-mentioned facial image may be determined as-is from a change in the center location of the iris region resulting from the rotation (of the eyeball) based on the center of the eyeball in the eyeball estimation model 123 acquired by the above-mentioned iris detection unit (25) (depicted in Fig. 2).

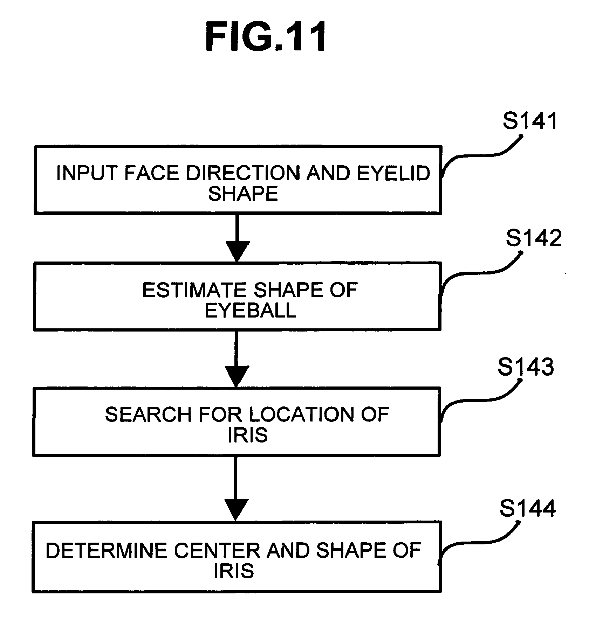

Fig. 11 is a flowchart showing an example of the processing operation for detecting the iris region in accordance with the iris detection unit (25) (depicted in Fig. 2) related to the third embodiment of the present invention.

In this embodiment, first, the above-mentioned iris detection unit (25) respectively acquires the value indicating the direction in which the face is oriented in the input facial image from the face direction measurement unit (27) (depicted in Fig. 2), and the eyelid contour model from the eyelid contour detection unit (23) (depicted in Fig. 2). For this reason, in the flowchart shown in Fig. 11, when the above-mentioned iris detection unit (25) executes a series of processing operations to detect the iris region, first, the eyelid contour model output from the above-mentioned eyelid contour detection unit (23) is input, and in addition the value indicating the direction in which the face is oriented in this facial image is input from the above-mentioned face direction measurement unit (27) (Step S141).

Next, the above-mentioned iris detection unit (25) executes a processing operation that estimates the shape of the eyeball region in the above-mentioned input facial image based on (information related to) the above-mentioned eyelid contour model input in Step S141, and the above-mentioned value indicating the direction in which the face is oriented. In the eyeball region shape estimate executed here, for example, various items, such as the center of the eyeball region, the radius of the eyeball region, and the radius of the iris region are used (Step S142). Next, the location of the iris region in the above-mentioned facial image is searched for on the basis of the values (that is, the radius of the eyeball region and the radius of the iris region) denoting the shape of the eyeball region determined in Step S142 (Step S143). Then, the above-mentioned iris detection unit (25) executes a processing operation for determining the center location of the iris region obtained in Step S143 and the shape of this iris region (Step S144).

According to the processing flow described hereinabove, estimating the shape of the eyeball region in the input facial image in accordance with the direction in which the face is oriented in this facial image makes it possible to search for the location of the iris region in the above-mentioned facial image by predicting a change in the shape of the iris region that could occur in the future, thereby making it possible to detect with a high degree of accuracy the center location in this iris region. Also, since the iris region search range need not be expanded more than necessary in the above-mentioned facial image, it is also possible to speed up the detection rate of the iris region.

Executing the above-described processing operation makes it possible to estimate the iris region with a high degree of accuracy within a self-regulated range in accordance with the shape of the eyeball region. Further, in the process that uses the above-mentioned three-dimensional model (the eyeball estimation model 123), it is possible to use not only the border portion between the iris region and the sclera region, but also all the points comprised within the iris region and within the sclera region in the above-described evaluation, so that, for example, it becomes possible to measure the iris region with a high degree of accuracy even in a case where the resolution of the eye (image) region is low. The problem with the elliptical Hough transform method is that since the above-mentioned evaluation is performed using only the edge points (contour points), fewer (edge) points (contour points) are able to be used in the above-mentioned evaluation in a case where the resolution of the eye (image) region is low, resulting in a higher likelihood of noise at the edge (contour) and degraded measurement accuracy of the iris region. However, using the method related to the above-described embodiment makes it possible to solve for the above problem.

The preferred embodiments of the present invention have been explained above, but these embodiments are examples for describing the present invention, and do not purport to limit the scope of the present invention solely to these embodiments. The present invention is capable of being put into practice in various other modes.

**Claims**

1. An image information processing apparatus comprising:

   a facial image region detection unit configured to detect a facial image region in an input image;
   an eyelid region contour detection unit configured to detect a contour of an eyelid region in the facial image region detected by the facial image region detection unit; and
   an iris region detection unit configured to detect a shape of an iris region in the facial image region on the basis of the contour of the eyelid region detected by the eyelid region contour detection unit,
   wherein a location of a pupil related to the iris region is estimated on the basis of the shape of the iris region detected by the iris region detection unit.

2. The image information processing apparatus according to Claim 1, wherein the eyelid region contour detection unit creates an eyelid contour model on the basis of the size of the facial image region detected by the facial image region detection unit, and detects the contour of the eyelid region by detecting contour points of the eyelid region in the facial image region using this created eyelid contour model and by determining the location of the eyelid region.

3. The image information processing apparatus according to Claim 2, wherein the eyelid region contour detection unit determines a location, which is evaluated as the most likely eyelid region in the facial image region, to be the location of the eyelid region by superposing the eyelid contour model onto the facial image region.

4. The image information processing apparatus according to Claim 3, wherein the evaluation is performed by extracting a feature value for each of the contour point locations in the eyelid contour model and calculating the likelihoods of these locations as contour points, and determining the sum of the calculated likelihoods.

5. The image information processing apparatus according to Claim 3, wherein the location determination of the eyelid region by the eyelid region contour detection unit includes processing for searching, within respective prescribed ranges, for the optimum location of each contour point for demarcating the contour of the eyelid region, and updating the locations of the respective contour points determined in the previous search to locations to be determined as more appropriate.

6. The image information processing apparatus according to Claim 1, further comprising:

   a face direction measurement unit configured to measure a value indicating the direction in which the face of a person imaged in the facial image is oriented from the facial image region detected by the facial image region detection unit.

7. The image information processing apparatus according to Claim 6, wherein the eyelid region contour detection unit creates an eyelid contour model on the basis of the size of the facial image region detected by the facial image region detection unit and the value indicating the direction in which the face is oriented as measured by the face direction measurement unit, and detects the contour of the eyelid region by detecting contour points of the eyelid region in the facial image region using this created eyelid contour model and by determining the location of the eyelid region.

8. The image information processing apparatus according to Claim 1 or Claim 6, wherein the iris region detection unit estimates the shape of an eyeball region in the facial image region on the basis of the value indicating the direction in which the face is oriented as measured by the face direction measurement unit and a prescribed eyelid contour model, searches for the location of the iris region on the basis of this estimated eyeball region shape, and determines the center location of the iris region and the shape of the iris region.

9. The image information processing apparatus according to Claim 8, wherein at least respective data of the center of the eyeball region, the radius of the eyeball region, and the radius of the iris region is used in the process for estimating the shape of the eyeball region.

10. An image information processing method comprising:

a first step of detecting a facial image region in an input image;

a second step of detecting a contour of an eyelid region in the facial image region detected in the first step;

a third step of detecting a shape of an iris region in the facial image region on the basis of the contour of the eyelid region detected in the second step; and

a fourth step of estimating a location of a pupil related to the iris region on the basis of the shape of the iris region detected in the third step.

# FIG.1

IMAGING DEVICE — 100

IMAGE INPUT UNIT — 1

IMAGE MEMORY — 3

CPU (EYE-GAZE DIRECTION OPERATOR) — 5

RAM — 7

ROM — 9

MEASUREMENT RESULT RECORDING UNIT — 11

OUTPUT I/F — 13

— 15

— 200

EYE-GAZE DIRECTION MEASUREMENT DEVICE

OUTPUT DEVICE — 300

# FIG. 2

EP 2 149 856 A2

# FIG.3

FIG.4

# FIG.5

INPUT FACE SIZE — S71

↓

SELECT OPTIMUM EYELID MODEL — S72

↓

DETERMINE LOCATION OF EYELID REGION — S73

↓

UPDATE RESPECTIVE CONTOUR POINT LOCATIONS OF EYELID MODEL — S74

↓

UPDATE AGAIN? — S75

YES

NO

↓

DETERMINE EYELID CONTOUR — S76

FIG.6A

43   45   47   81

31

33

41

39   37   35

FIG.6B

81

83

FIG.6C   FIG.6D

85   81

89

87

FIG.7

# FIG.8

```
                                              S111
┌─────────────────────────────┐╱
│   INPUT FACE SIZE AND        │
│   DIRECTION                  │
└─────────────────────────────┘
              │                    S112
              ▼                  ╱
┌─────────────────────────────┐
│   CREATE OPTIMUM EYELID      │
│   MODEL                      │
└─────────────────────────────┘
              │                    S113
              ▼                  ╱
┌─────────────────────────────┐
│   DETERMINE LOCATION OF      │
│   EYELID REGION              │
└─────────────────────────────┘
              │                          S114
              ▼                        ╱
┌──────────────────────────────────┐◄──┐
│  UPDATE RESPECTIVE CONTOUR POINT  │   │
│  LOCATIONS OF EYELID MODEL        │   │
└──────────────────────────────────┘   │
              │                         │
              ▼           YES           │
          ◇ UPDATE ◇ ───────────────────┘
          ◇ AGAIN? ◇
              │          S115
              │ NO
              ▼
┌─────────────────────────────┐
│      DETERMINE               │
│   EYELID CONTOUR             │
└─────────────────────────────┘
                              S116
```

# FIG.9

## FIG.10A

## FIG.10B

# FIG.11

INPUT FACE DIRECTION AND EYELID SHAPE — S141

↓

ESTIMATE SHAPE OF EYEBALL — S142

↓

SEARCH FOR LOCATION OF IRIS — S143

↓

DETERMINE CENTER AND SHAPE OF IRIS — S144

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008194379 A
- JP 2007006427 A

- JP 3797253 B